(19) Europäisches Patentamt
European Patent Office
Office européen des brevets

(11) EP 1 695 873 B1

(12) EUROPEAN PATENT SPECIFICATION

(45) Date of publication and mention
of the grant of the patent:
**09.07.2008 Bulletin 2008/28**

(51) Int Cl.:
*B60R 16/02* (2006.01)  *G10L 15/20* (2006.01)

(21) Application number: 05003923.9

(22) Date of filing: 23.02.2005

(54) **Vehicle speech recognition system**

Spracherkennungssytem in einem Kraftfahrzeug

Système de reconnaissance de la parole équipant un véhicule

(84) Designated Contracting States:
**AT BE BG CH CY CZ DE DK EE ES FI FR GB GR HU IE IS IT LI LT LU MC NL PL PT RO SE SI SK TR**

(43) Date of publication of application:
**30.08.2006 Bulletin 2006/35**

(73) Proprietor: **Harman Becker Automotive Systems GmbH**
**76307 Karlsbad (DE)**

(72) Inventors:
• **Buck, Markus**
**88400 Biberach (DE)**
• **Schmidt, Gerhard Uwe**
**89081 Ulm (DE)**
• **Haulick, Tim**
**89143 Blaubeuren (DE)**

(74) Representative: **Grünecker, Kinkeldey, Stockmair & Schwanhäusser**
**Anwaltssozietät**
**Leopoldstrasse 4**
**80802 München (DE)**

(56) References cited:
EP-A- 0 472 356          EP-A- 0 624 046
EP-A- 1 085 781          EP-A- 1 493 993
US-A1- 2004 143 440      US-B1- 6 731 334

## Description

### Field of Invention

The present invention relates to the control of vehicle elements and, in particular, to the automatic adjustment of elements provided inside or outside a vehicular cabin based on the position of a driver or another passenger determined by means of microphones.

### Prior Art

The passengers of vehicles, in particular, drivers have to operate different apparatus and cabin elements as, e.g., operating controls, mirrors, displays and entertainment devices, before the start of a travel and also while traveling. Displays and mirrors, e.g., have to be adjusted to the viewing angle of the driver and/or the other passengers.

The vehicular cabin elements (inside or outside the vehicular cabin) are usually manipulated by hand. Given the increasing number of elements to be handled, restriction to manual operation is more and more considered uncomfortable. Moreover, the need or desire for manipulating different devices during the travel distracts the driver's attention thereby increasing the risk of accidents, in particular, in the case of car drives in urban areas.

In recent years employment of servo-motors for actuating cabin elements as seats, windows, and mirrors became prevalent in higher-class automobiles as well as in ships and boats. Manipulating by crank handles and manual turning is partly replaced by pressing or touching buttons that initiate operation by servo-motors.

However, each time a user wants a cabin element to be re-adjusted, e.g., due to slight positional changes, he has to operate the buttons in order to have the servo-motors to adjust the respective cabin element. Moreover, if different drivers use the same vehicle at different times, particular adjustments, e.g., the inclination of an interior and an exterior mirror of an automobile, chosen by one of the drivers are almost necessarily inappropriate for another one.

EP 0 472 356 A1 discloses a speech recognition apparatus according to the preamble of claims 1 and 12 that is configured to determine from which seat of a vehicle a command is generated. The disclosed apparatus comprises a command seat discriminating means that consists of a comperator that outputs signals based on phase shift and in-phase information of microphone signals.

EP 1 085 781 A2 discloses a voice control suitable in the case of a relatively great distance of a speaker from microphones. It is disclosed an apparatus for adapting the direction characteristics of directional microphones on the basis of signals provided by a means for detecting the position of the speaker.

EP 0 624 046 A1 describes a hands-free set with noise compensation comprising directional microphones by which microphone signals are obtained that are subtracted from each other to obtain an enhanced wanted signal.

In the US patent US 6 731 334 B1 an automatic voice tracking camera system comprising a microphone array and a beamformer is described.

Consequently, there is still a need for a more comfortable and safer adjustment of vehicular cabin elements, in particular, of those elements that assist the driver in observing the traffic and orientating himself. It is therefore an object of the present invention to provide an improved control of cabin elements.

### Description of the invention

The above mentioned object is achieved by a system for automatic adjustment of vehicular cabin elements according to claim 1 and a method for adjusting vehicular cabin elements according to claim 12.

According to claim 1 it is provided a system for automatic adjustment of at least one element provided with at least one actuator and provided inside or outside a vehicular cabin, comprising

at least one microphone array for detecting utterances of at least one speaker and for obtaining microphone signals corresponding to the utterances;

localization means configured to determine the position of the at least one speaker on the basis of the microphone signals and to output at least one localization signal; and

control means configured to receive the at least one localization signal and to automatically control the at least one actuator of the at least one element on the basis of the at least one localization signal.

An element provided inside or outside a vehicular cabin, herein also referred to as 'vehicular cabin element' or simply 'element', may be a standard equipment component, as, e.g., a mirror, a blower of a heating, but also a display, e.g., of an on-board navigation system and a video/DVD and television device, as well as a component of audio entertainment devices. The at least one vehicular cabin element is equipped with an actuator (servo-motors) that electrically adjusts the element according to control signals transmitted by a control means. The control means is not necessarily physically separated from the localization means and may, in particular, be integrated in the latter.

The terms vehicle and 'vehicular cabin', in general, herein refer to watercrafts, aircrafts and automobiles. Automobiles represent a preferred application of the embodiments of the inventive method and system disclosed herein.

The microphone signals may preferably be digitized and undergo a Fast Fourier Transformation for further processing. Methods for speaker localization using microphone arrays are known in the art (see, e.g., Microphone arrays: signal processing techniques and application, M. Brandstein and D. Ward, Springer, Berlin, 2001). Different sound travel times may, e.g., be detected by different microphones which, considering the constant sound speed, allow for a determination of the distance of some acoustic source to the respective microphones. However, the term microphone array includes the trivial case of only one microphone.

The individual actuators of the vehicular cabin elements are controlled on the basis of the localization signals that encode the accurate position of the driver and possibly of other passengers. For the accurate position the according optimized position and, in particular, inclination of the respective vehicular element that is to be adjusted can be set up by means of the actuators. Preferably, for possible positions of the driver and other passengers the respective positions and inclinations of the vehicular elements are stored and actuation of the elements is performed using these stored data.

By the inventive system a more comfortable and safer adjustment of vehicular cabin elements, in particular, of those elements that assist the driver in observing the traffic and orientating himself is provided than presently available in the art.

When a driver starts the engine, the mirrors, e.g., can automatically be adjusted to the size of the driver. Positional changes can be compensated for by the disclosed automatic adjustment of vehicular cabin elements. It may be, e.g., that during the travel the driver decides to sit closer to or farer from the windshield. Consequently, the previous inclination of, e.g., the interior mirror no longer provides the optimal rear view. The interior mirror can be automatically adjusted corresponding to the new position of the drivers after he has performed verbal utterances or voiced sounds that not necessarily represent semantically meaningful sounds.

In principle, the inventive system may be configured in a manner that it can be used by all passengers of a vehicle. Priority should, however, be given to the driver. It may be preferred that some particular vehicular cabin elements, as, e.g., the interior mirror, is automatically adjusted in response to the driver's utterances only.

An embodiment of the inventive system may further comprise a speech recognition system configured to receive the microphone signals and to output at least one command signal on the basis of the microphone signals to the control means and the control means may be configured to receive the at least one command signal and to control the at least one actuator of the at least one vehicular cabin element on the basis of the at least one command signal.

Herein, the term "speech recognition means" refers to a means that may comprise a speech output whereas the term "speech dialog system" (see below) is used to refer to a means that does comprise a speech output.

The speech recognition system may be configured to also receive the at least one localization signal and to output the at least one command signal on the basis of the at least one localization signal. In this case the control means may additionally use the at least one localization signal received from the localization means to control the at least one actuator and/or to crosscheck the commands given by the speech recognition system.

Whereas employment of a speech recognition system is not mandatory for the inventive method it may be advantageously used in automatically adjusting vehicular cabin elements. For example, a driver who wants to have the blowers of the heating to be re-directed to or away from his present position, may utter "Blowers" or "Put blowers aside". The speech recognition system can be configured to map the associated microphone signals to the corresponding data representation and to transmit the appropriate command signals to the control means that subsequently re-direct the blowers utilizing the actuators of the blowers.

The system for automatic adjustment of at least one vehicular cabin element may further comprise a beamforming means configured to receive the microphone signals, to receive the at least one localization signal, to beamform the microphone signals on the basis of the at least one localization signal to obtain beamformed signals and to transmit the beamformed signals to the speech recognition system, and the speech recognition system may be configured to receive the beamformed signals and to output the at least one command signal on the basis of the beamformed signals to the control means.

The beamforming means enhances the signal-to-noise ratio (SNR) significantly and thereby increases the reliability of the speech recognition system, i.e. the probability that the correct data representation for the detected microphone signals is identified. The beamforming means may be an adaptive weighted sum beamformer that combines preferably time delayed complex-valued signals $X_{T,m}$ of M microphones preprocesed by a time delay means to obtain one output signal Y with an improved SNR

$$Y = \sum_{m=1}^{M} A_m \, X_{T,m}$$

The weights $A_m$ may be time-independent or time-dependent In the latter case they have to be recalculated repeatedly as it is required, e.g., to maintain sensitivity in the desired direction and to minimize sensitivity in the directions of noise sources. The desired direction is determined by the localization means.

The localization means can be configured to evaluate the accurateness of the localization of the at least one speaker and to transmit at least one failure signal to the speech recognition system, if the accurateness of the localization of the at least one speaker is below a predetermined level and the speech recognition system can be configured to receive the at least one failure signal and to output a repeat demand to the at least one speaker when receiving the at least one failure signal.

It could happen that a driver utters "Interior mirror" to have the interior mirror to be re-adjusted, but the localization means is not able to accurately localize the driver/speaker. This may be caused by some transient noise, e.g., caused by a passing heavy truck. Test runs may be performed to determine the levels of accuracy of speaker localization below which no satisfying adjustment of a particular vehicular cabin element is possible. For different vehicular cabin elements different levels may be determined.

If the localization means is not able to localize the speaker with satisfying accuracy, it may output a failure signal to the speech recognition system. This may output a repeat demand, i.e. ask the speaker to repeat his command, e.g. by the synthesized utterance "Please repeat". When the driver utters again "Interior mirror" the localization means again localizes the speaker, possibly, with a higher accuracy than before.

Furthermore, the system may comprise at least one sensor means, in particular, a means for detecting the daylight, configured to obtain and to transmit at least one sensor signal, and the control means may be configured to receive the at least one sensor signal and to control the at least one actuator of the at least one vehicular cabin element on the basis of the at least one sensor signal.

Changing weather conditions and progressing twilight may demand for the adjustment of the interior mirror, for example. An adjustment of vehicular cabin elements in response to both positional changes of the driver and exterior conditions can further improve comfort and safety.

The control means can be configured to adjust the at least one vehicular cabin by operating the at least one actuator, if a positional change of the at least one speaker above a predetermined level is determined by the localization means. The predetermined level may be chosen by the driver from a variety of levels offered by the system. Test runs may be performed to generate the different levels a driver may choose from. Thus, according to the individual preferences automatic adjustment of vehicular cabin elements is provided thereby further increasing the comfort.

A manual re-adjustment means for re-adjustment of the at least one vehicular cabin element by the at least one speaker may also be provided. Such a feature is particularly helpful, if the automatic adjustment does not work accurately enough, and/or if the speech recognition system cannot properly recognize verbal utterances due to, e.g., too much noise.

The at least one microphone array that is part of embodiments of the inventive system may comprise at least one one-dimensional and/or at least one two-dimensional and/or at least one three-dimensional assembly of microphones and the at least one microphone array comprises at least one directional microphone, in particular, more than one directional microphone pointing in different directions.

Usage of directional microphones may not only improve the localization of the speaker but also supports a possible identification of utterances by the driver in contrast to utterances by other passengers. One subset of directional microphones may be directed to the driver, another one to another front-passenger in order to increase the reliability of the identification of an actual speaker.

The inventive system can comprise a frame wherein each microphone of the at least one microphone array is arranged in a predetermined, in particular fixed, position in or on the frame. This ensures that after manufacture of the frame with the microphones, the relative positions of the microphones are known.

Whereas one-dimensional (linear) microphone arrays can be easily installed at relatively low costs, two- and, in particular, three-dimensional arrays allow for a more accurate estimate of the direction and position of a speaker.

The at least one vehicular cabin element that is to be adjusted automatically may comprise at least one interior mirror and/or at least one exterior mirror and/or at least one head rest and/or at least one arm rest and/or a steering wheel and/or at least one blower of a heating and/or at least one display, in particular, a display of an on-board navigation system, and/or at least one loudspeaker.

In principle, interior and exterior mirrors may be adjusted according to the driver's position. Displays may be orientated to allow the other passenger optimal visibility of the screen. It may be preferred that by default all vehicle cabin elements are adjusted according to the driver's position/utterances, and that some elements, as, e.g., audio playback devices, are chosen to respond to utterances by the other passengers.

In order to achieve the above mentioned object, the present invention also provides a method for automatically adjusting at least one vehicular cabin element provided with at least one actuator, comprising detecting utterances, that may include sounds that are not necessarily semantically meaningful, of at least one speaker by at least one microphone array and obtaining microphone signals corresponding to the utterances; determining the position of the at least one speaker on the basis of the microphone signals; and automatically controlling the at least one actuator of the at least one vehicular cabin element on the basis of the determined position of the at least one speaker to adjust the at least one vehicular cabin element.

The actuator can be controlled to adjust the vehicular cabin element according to the speaker's position. For example, an interior mirror can, thus, be adjusted to the optimal inclination depending on the driver's position.

Preferably, a speech recognition system may further be provided to recognize a speech input of the at least one speaker and to obtain a recognizing result and wherein the recognizing result determines which one of the at least one vehicular cabin element is adjusted. Thus, automatic adjustment on verbal demand by the driver or another passenger is enabled.

The microphone signals that are detected by at least one microphone array may be beamformed by a beamforming means, e.g., an adaptive beamformer and the beamformed microphones signals may be output to the speech recognition system.

The accurateness of the localization of the at least one speaker can be evaluated and a repeat demand, as, e.g., "Repeat please!" is output to the at least one speaker by the speech recognition system when the determined accurateness is below a predetermined level.

The speech recognition system may receive information about the accurate position of the at least one speaker and may transmit this information to a control means that controls the at least one actuator of the at least one vehicular cabin element.

Furthermore, the at least one actuator of the at least one vehicular cabin element can be further controlled on the basis of data obtained by at least one sensor means, in particular, a sensor means for detecting the daylight.

Moreover, the at least one vehicular cabin element can be manually re-adjusted by the at least one speaker.

According to an embodiment of the present method, the position of the at least one speaker can be determined on the basis of microphone signals detected by at least one microphone array comprising at least one one-dimensional and/or at least one two-dimensional and/or at least one three-dimensional assembly of microphones. The at least one microphone array may comprise at least one directional microphone, in particular, more than one directional microphone pointing in different directions.

The at least one vehicular cabin element controlled by an embodiment of the disclosed method may comprise at least one interior mirror and/or at least one exterior mirror and/or at least one head rest and/or at least one arm rest and/or a steering wheel and/or at least one blower of a heating and/or at least one display, in particular, a display of an on-board navigation system, and/or at least one loudspeaker.

Furthermore, the present invention provides a computer program product, comprising one or more computer readable media having computer-executable instructions for performing the steps of embodiments of the inventive method for automatic adjustment of vehicular cabin elements as described above.

Additional features and advantages of the invention will be described with reference to the drawings:

Figure 1 shows an example of the inventive system including a microphone array and a localization means.

Figure 2 is shows an example of the inventive system including a microphone array, a localization means a beamformer and a speech dialog system.

Figure 3 is a block diagram illustrating an example of the inventive method including localization of a speaker and actuating an interior mirror.

Figure 4 is a block diagram illustrating an example of the inventive method including accurate localization of a speaker after a second verbal utterance by a speaker asked for by a speech dialog system and actuating an exterior mirror.

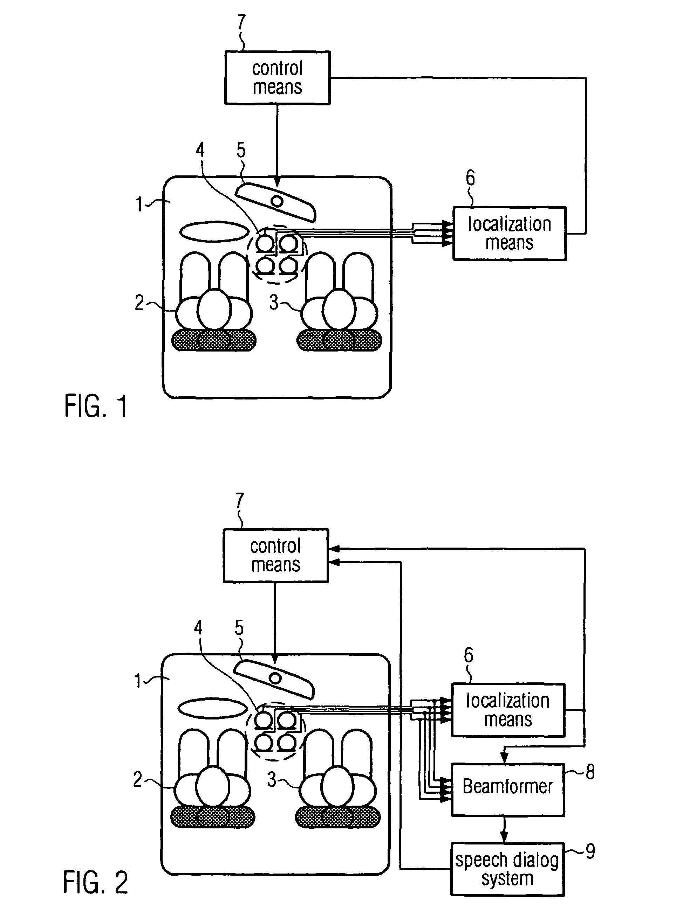

Fig. 1 illustrates components of an example of the disclosed system for automatic adjustment of vehicular cabin elements. In a vehicular cabin 1 of an automobile a driver 2 and a further front-seat passenger 3 may be considered. Between them a microphone array 4 consisting of four microphones is installed. It should be noted that the microphone array may consist of more microphones and that additional microphone arrays, e.g., on the driver's left-hand-side or in front of the driver 2, may be installed in the vehicular cabin. The microphones are preferably directional ones and the two left microphones are directed to the driver 2 whereas the two right ones are directed to the other front-passenger 3.

An interior (driving) mirror 5 is to be considered as an example for a cabin element to be controlled by the embodiment of the inventive system. Assume that the mirror 5 has been adjusted during the present travel in urban areas according to the driver's preferences. The passengers intend to leave the urban area for an overland travel and, thus, after some period of time they travel on a countryside highway. The driver 2 changes the position or inclination of the seat to prepare for a more relaxed longer travel. Consequently, the inclination of the mirror 5 has to be adjusted to guarantee an optimal rear view.

Assume that the driver 2 and the other front-passenger are talking to each other. The driver's verbal utterances 2 are detected by the microphone array 4 and, in particular, by the two left microphones of the microphone area. The detected signals are input in a localization means 6. Differences in the sound transit time of the sounds detected by different microphones of the microphone array 4 can be determined by the localization means 6 in order to localize the driver 2 accurately.

The localization means 6 outputs signals according to the determined driver's position to a control means 7. The mirror 5 is equipped with a servo-motor that is controlled by the control means 7 in order to adjust the mirror in a way to provide an optimal rear view for the driver at his new position.

Fig. 2 shows an enhanced version of the inventive system as compared to Fig. 1. As seen in Fig. 2 the vehicular cabin 1 is also equipped with a speech dialog system 9 and a beamformer 8 for improving the quality of the detected and processed speech signals that serve as input signals for the speech dialog system 9.

Microphone signals obtained by the microphone array 4 are used by the localization means 6 to localize the speaker, in particular, the driver 2. The microphone signals are also input in the (adaptive) beamformer 8. The beamformer may reduce noise and provides the speech dialog system 9 with speech signals with preference to signals associated with the driver's utterances. For this purpose, the beamformer uses signals output by the localization means 6, to be enabled to determine which signals are associated with the driver's utterances. In other words, employment of the localization means 6 allows for adjustment of the directional lobe of the beamformer 8.

However, the beamformer 8 is only an optional component of the disclosed system that improves the quality of the speech signals thereby increasing the reliability of the speech dialog system 9. Employment of further noise reduction means may be advantageous. By means of the speech dialog system 9 the driver 2 is enabled to explicitly ask for adjustment of the interior mirror 5 or any other cabin element included in the disclosed system.

According to the presently discussed example, the control means 7 may cause adjustment of the mirror 5 in response to signals input be the localization means 6 and/or by signals input by the speech dialog system 9. As described with reference to Fig. 1 the localization means may detect some positional changes of the driver and may notice the control means 7 about the changed position. The servo-motor of the mirror 5 is controlled by the control means 7 to adjust the mirror 5 to the new optimal inclination.

Moreover, the driver 2 may use the speech dialog system 9 to have the mirror 5 be adjusted to the new position. He may command "Adjust interior mirror !" The associated speech signals are detected by the microphone array 4 and processed by the beamformer 8 before they are input to the speech dialog system 9. A speech recognizing means included in the speech dialog system 9 maps the signals to the appropriated data representation and, consequently, signals are output to the control means 7 that cause the control means 7 to control the servo-motor of the mirror 5 to adjust the mirror according to the localization information obtained by the localization means 6.

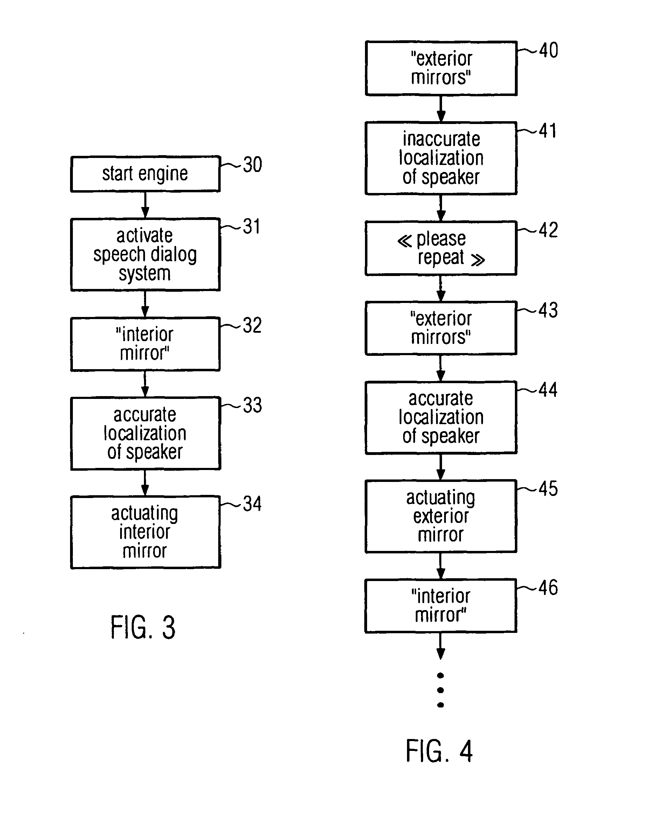

Fig. 3 shows steps of an example of the inventive method. A driver enters an automobile and starts the engine 30. Alternatively, he may only initiate the ignition by only partly turning the key in the starter lock. Then, he activates a speech dialog system 31, e.g., by pressing the appropriate button. Before starting the travel he wants the interior mirror to be adjusted.

The driver commands "Interior mirror" 32. The verbal utterance is detected by a microphone array comprising multiple directional microphones. The position of the speaker is determined 33 accurately by a localization means provided with the microphone signals. The speech dialog system can subsequently initiate actuating of the interior mirror 34 in order to adjust it for an optimal rear view in dependence on the driver's accurate position.

Consider, now referring to Fig. 4, that a driver wants to adjust the exterior left-hand-side and right-hand-side mirrors of an automobile. Assume that the vehicular cabin is equipped with a speech dialog system. The driver utters "Exterior mirrors" 40. The speech dialog system may be able to successfully recognize the speech signals detected by one or more microphone arrays, but a localization means may fail, e.g., due to high transient noise level, in accurately determining the speaker's position 41. In this case, the localization means sends a failure signal to the speech dialog system that is configured to respond to such a failure signal by outputting a repeat demand 42.

The driver repeats his command 43 and it may be assumed that now the localization means succeeds in accurately localizing the speaker 44. Consequently, the speech dialog system can cause a control unit to adjust the exterior mirrors by servo-motors 45 according to the driver's position.

After actuation of the exterior mirrors 45 has been completed the speech dialog system may be in a stand-by mode. The driver may also have the interior mirror be re-adjusted and an utterance "Interior mirror" 46 can result in accurate adjustment of the interior mirror in a similar way as described above.

All previously discussed embodiments are not intended as limitations but serve as examples illustrating features and advantages of the invention.

**Claims**

1. System for automatic adjustment of at least one element provided with at least one actuator and provided inside or outside a vehicular cabin (1), comprising
at least one microphone array (4) for detecting utterances of at least one speaker and for obtaining microphone signals corresponding to the utterances; **characterized in that**:

    localization means (6) configured to determine the position of the at least one speaker on the basis of the microphone signals and to output at least one localization signal encoding the accurate position of the at least one speaker; and control means (7) configured to receive the at least one localization signal and to automatically control the at least one actuator of the at least one element on the basis of the at least one localization signal.

2. System according to claim 1, further comprising a speech recognition system configured to receive the microphone signals and to output at least one command signal on the basis of the microphone signals to the control means (7), and wherein the control means (7) is configured to receive the at least one command signal and to control the at least one actuator of the at least one element on the basis of the at least one command signal.

3. System according to claim 2, further comprising a beamforming means (8) configured
to receive the microphone signals;
to receive the at least one localization signal;
to beamform the microphone signals on the basis of the at least one localization signal to obtain beamformed signals;
to transmit the beamformed signals to the speech recognition system; and
wherein the speech recognition system is configured to receive the beamformed signals and to output the at least one command signal on the basis of the beamformed signals to the control means (7).

4. System according to claim 2 or 3, wherein
the localization means (6) is configured to evaluate the accurateness of the localization of the at least one speaker,
to transmit at least one failure signal to the speech recognition system, if the accurateness of the localization of the at least one speaker is below a predetermined level; and
the speech recognition system is configured to receive the at least one failure signal and to output a repeat demand to the at least one speaker when receiving the at least one failure signal.

5. System according to one of the claims 2 - 4, wherein the speech recognition system is configured to also receive the at least one localization signal and to output the at least one command signal on the basis of the at least one localization signal.

6. System according to one of the preceding claims further comprising at least one sensor means, in particular, a sensor means for detecting the daylight, configured to obtain and to transmit at least one sensor signal, and wherein the control means (7) is configured to receive the at least one sensor signal and to control the at least one actuator of the at least one element on the basis of the at least one sensor signal.

7. System according to one of the preceding claims, wherein the control means (7) is configured to adjust the at least one vehicular cabin (1) by operating the at least one actuator, if a positional change of the at least one speaker above a predetermined level is determined by the localization means (6).

8. System according to one of the preceding claims further comprising a manual re-adjustment means for re-adjustment of the at least one element by the at least one speaker.

9. System according to one of the preceding claims, wherein the at least one microphone array (4) comprises at least one one-dimensional and/or at least one two-dimensional and/or at least one three-dimensional assembly of microphones.

10. System according to claim 9, wherein the at least one microphone array (4) comprises at least one directional microphone, in particular, more than one directional microphone pointing in different directions.

11. System according to one of the preceding claims, wherein the at least one element comprises at least one interior mirror (5) and/or at least one exterior mirror and/or at least one head rest and/or at least one arm rest and/or a steering wheel and/or at least one blower of a heating and/or at least one display, in particular, a display of an on-board navigation system, and/or at least one loudspeaker.

12. Method for automatically adjusting at least one element provided with at least one actuator and provided inside or outside a vehicular cabin (1), comprising detecting utterances of at least one speaker by at least one microphone array (4) and obtaining microphone signals corresponding to the utterances;
**characterized in that**
determining the position of the at least one speaker on the basis of the microphone signals; and
automatically controlling the at least one actuator of the at least one element on the basis of the determined position of the at least one speaker to adjust the at least one element.

13. Method according to claim 12, wherein further a speech recognition system is provided to recognize a speech input of the at least one speaker and to obtain a recognizing result and wherein the recognizing result determines which one of the at least one element is adjusted.

14. Method according to claim 13, wherein the microphone signals detected by at least one microphone array (4) are beamformed and output to the speech recognition system.

15. Method according to claim 13 or 14, wherein the accurateness of the localization of the at least one speaker is evaluated and a repeat demand is output to the at least one speaker by the speech recognition system when the determined accurateness is below a predetermined level.

**16.** Method according to one of the claims 13 - 15, wherein the speech recognition system receives information about the accurate position of the at least one speaker and transmits this information to a control means (7) that controls the at least one actuator of the at least one element.

**17.** Method according to one of the claims 12 - 16, wherein the at least one actuator of the at least one element is further controlled on the basis of data obtained by at least one sensor means, in particular, a means for detecting the daylight.

**18.** Method according to one of the claims 12 - 17, wherein the at least one element can be manually re-adjusted by the at least one speaker.

**19.** Method according to one of the claims 12 - 18, wherein the position of the at least one speaker is determined on the basis of microphone signals detected by at least one microphone array (4) comprising at least one one-dimensional and/or at least one two-dimensional and/or at least one three-dimensional assembly of microphones.

**20.** Method according to claim 19, wherein the at least one microphone array (4) comprises at least one directional microphone, in particular, more than one directional microphone pointing in different directions.

**21.** Method according to one of the claims 12 - 20, wherein the at least one element comprises at least one interior mirror (5) and/or at least one exterior mirror and/or at least one head rest and/or at least one arm rest and/or a steering wheel and/or at least one blower of a heating and/or at least one display, in particular, a display of an on-board navigation system, and/or at least one loudspeaker.

**22.** Computer program product, comprising one or more computer readable media having computer-executable instructions for performing the steps of the method according to one of the Claims 12 - 21.

**Patentansprüche**

**1.** System zum automatischen Justieren von zumindest einem Element, das zumindest mit einem Aktuator versehen ist und das innerhalb oder außerhalb einer Fahrzeugkabine (1) vorgesehen ist, umfassend
zumindest eine Mikrofonanordnung (4) zum Detektieren von Äußerungen von zumindest einem Sprecher und zum Erhalten von Mirofonsignalen entsprechend den Äußerungen;
**gekennzeichnet durch**

eine Lokalisierungseinrichtung (6), die dazu ausgebildet ist, die Position des zumindest einen Sprechers auf der Grundlage der Mikrofonsignale zu bestimmen und zumindest ein Lokalisationssignal, das die genaue Position des zumindest einen Sprechers codiert, auszugeben; und
eine Steuereinrichtung (7), die dazu ausgebildet ist, das zumindest eine Lokalisationssignal zu empfangen und automatisch den zumindest einen Aktuator des zumindest einen Elements auf der Grundlage des zumindest einen Lokalisationssignals zu steuern.

**2.** System gemäß Anspruch 1, weiterhin ein Spracherkennungssystem umfassend, das dazu ausgebildet ist, die Mikrofonsignale zu empfangen und zumindest ein Befehlssignal auf der Grundlage der Mikrofonsignale an die Steuereinrichtung (7) auszugeben, und in dem die Steuereinrichtung (7) dazu ausgebildet ist, das zumindest eine Befehlssignal zu empfangen und den zumindest einen Aktuator des zumindest einen Elements auf der Grundlage des zumindest einen Befehlssignals zu steuern.

**3.** System gemäß Anspruch 2, weiterhin eine Beamforming - Einrichtung (8) umfassend, die dazu ausgebildet ist,
das zumindest eine Lokalisationssignal zu empfangen;
die Mikrofonsignale auf der Grundlage des zumindest einen Lokalisationssignals zu beamformen, um beamgeformte Signale zu erhalten;
die beamgeformten Signale an das Spracherkennungssystem zu übermitteln; und
in dem das Spracherkennungssystem dazu ausgebildet ist, die beamgeformten Signale zu empfangen und das zumindest eine Befehlssignal auf der Grundlage der beamgeformten Signale an die Steuereinrichtung (7) auszugeben.

**4.** System gemäß Anspruch 2 oder 3, in dem
die Lokalisierungseinrichtung (6) dazu ausgebildet ist, die Genauigkeit der Lokalisierung des zumindest einen Sprechers zu bewerten;
zumindest ein Fehlersignal an das Spracherkennungssystem zu übermitteln, wenn die Genauigkeit der Lokalisierung des zumindest einen Sprechers unterhalb einer vorbestimmten Grenze liegt; und
das Spracherkennungssystem dazu ausgebildet ist, das zumindest eine Fehlersignal zu empfangen und eine Wiederholungsaufforderung an den zumindest einen Sprecher auszugeben, wenn es das zumindest eine Fehlersignal empfängt.

**5.** System gemäß einem der Ansprüche 2 - 4, in dem das Spracherkennungssystem dazu ausgebildet ist, das zumindest eine Lokalisationssignal zu empfangen und das zumindest eine Befehlssignal auf der Grundlage des zumindest einen Lokalisationssignals auszugeben.

6. System gemäß einem der vorangegangenen Ansprüche, weiterhin zumindest eine Sensoreinrichtung, insbesondere eine Sensoreinrichtung zum Detektieren des Tageslichts, umfassend, die dazu ausgebildet ist, zumindest ein Sensorsignal zu gewinnen und zu übermitteln, und in dem die Steuereinrichtung (7) dazu ausgebildet ist, das zumindest eine Sensorsignal zu empfangen und den zumindest einen Aktuator des zumindest einen Elements auf der Grundlage des zumindest einen Sensorsignals zu steuern.

7. System gemäß einem der vorangegangenen Ansprüche, in dem die Steuereinrichtung (7) dazu ausgebildet ist, die zumindest eine Fahrzeugkabine (1) durch Betätigen des zumindest einen Aktuators zu justieren, wenn eine positionelle Änderung des zumindest einen Sprechers oberhalb einer bestimmten Grenze von der Lokalisierungseinrichtung (6) bestimmt wird.

8. System gemäß einem der vorangegangenen Ansprüche, weiterhin eine manuelle Justiereinrichtung zum Rejustieren des zumindest einen Elements durch den zumindest einen Sprecher umfassend.

9. System gemäß einem der vorangegangenen Ansprüche, in dem die zumindest eine Mikrofonanordnung (4) zumindest eine eindimensionale und/oder zumindest eine zweidimensionale und/oder zumindest eine dreidimensionale Anordnung von Mikrofonen umfasst.

10. System gemäß Anspruch 9, in dem die zumindest eine Mikrofonanordnung (4) zumindest ein Richtmikrofon, insbesondere mehr als ein Richtmikrofon, die in verschiedene Richtungen zeigen, umfasst.

11. System gemäß einem der vorangegangenen Ansprüche, in dem das zumindest eine Element zumindest einen Innenspiegel (5) und/oder zumindest einen Außenspiegel und/oder zumindest eine Kopfstütze und/oder zumindest eine Armstütze und/oder ein Lenkrad und/oder zumindest ein Gebläse oder eine Heizung und/oder eine Anzeige, insbesondere eine Anzeige eines Bord - Navigationssystems, und/oder zumindest einen Lautsprecher umfasst.

12. Verfahren zum automatischen Justieren von zumindest einem Element, das zumindest mit einem Aktuator versehen ist und das innerhalb oder außerhalb einer Fahrzeugkabine (1) vorgesehen ist, umfassend
Detektieren von Äußerungen von zumindest einem Sprecher mit zumindest einer Mikrofonanordnung (4) und Erhalten von Mirofonsignalen entsprechend den Äußerungen;
**gekennzeichnet durch**
Bestimmen der Position des zumindest einen Sprechers auf der Grundlage der Mikrofonsignale; und automatisches Steuern des zumindest einen Aktuators des zumindest einen Elements auf der Grundlage der bestimmten Position des zumindest einen Sprechers, um das zumindest eine Element zu justieren.

13. Verfahren gemäß Anspruch 12, in dem weiterhin ein Spracherkennungssystem bereitgestellt wird, um eine Spracheingabe des zumindest einen Sprechers zu erkennen und ein Erkennungsergebnis zu erhalten, und in dem das Erkennungsergebnis bestimmt, welches von dem zumindest einem Element justiert wird.

14. Verfahren gemäß Anspruch 13, in dem Mikrofonsignale, die von der zumindest einen Mikrofonanordnung (4) detektiert werden, gebeamformt und an das Spracherkennungssystem ausgegeben werden.

15. Verfahren gemäß Anspruch 13 oder 14, in dem die Genauigkeit der Lokalisierung des zumindest einen Sprechers ausgewertet wird und eine Wiederholungsaufforderung an den zumindest einen Sprecher von dem Spracherkennungssystem ausgegeben wird, wenn die bestimmte Genauigkeit unterhalb einer vorbestimmten Grenze liegt.

16. Verfahren gemäß einem der Ansprüche 13 - 15, in dem das Spracherkennungssystem Informationen über die genaue Position des zumindest einen Sprechers empfängt und diese Informationen an eine Steuereinrichtung (7) übermittelt, die den zumindest einen Aktuator des zumindest einen Elements steuert.

17. Verfahren gemäß einem der Ansprüche 12 - 16, in dem der zumindest eine Aktuator des zumindest einen Elements weiterhin auf der Grundlage von Daten gesteuert wird, die von zumindest einer Sensoreinrichtung, insbesondere einer Einrichtung zum Detektieren von Tageslicht, gewonnen werden.

18. Verfahren gemäß einem der Ansprüche 12 - 17, in dem das zumindest eine Element manuell durch den zumindest einen Sprecher rejustiert werden kann.

19. Verfahren gemäß einem der Ansprüche 12 - 18, in dem die Position des zumindest einen Sprechers auf der Grundlage von Mikrofonsignalen bestimmt wird, die von zumindest einer Mikrofonanordnung (4) detektiert werden, die zumindest eine eindimensionale und/oder zumindest eine zweidimensionale und/oder zumindest eine dreidimensionale Anordnung von Mikrofonen umfasst.

**20.** Verfahren gemäß Anspruch 19, in dem die zumindest eine Mikrofonanordnung (4) zumindest ein Richtmikrofon, insbesondere mehr als ein Richtmikrofon, die in verschiedene Richtungen zeigen, umfasst.

**21.** Verfahren gemäß einem der Ansprüche 12 - 20, in dem das zumindest eine Element zumindest einen Innenspiegel (5) und/oder zumindest einen Außenspiegel und/oder zumindest eine Kopfstütze und/oder zumindest eine Armstütze und/oder ein Lenkrad und/oder zumindest ein Gebläse oder eine Heizung und/oder eine Anzeige, insbesondere eine Anzeige eines Bord - Navigationssystems, und/oder zumindest einen Lautsprecher umfasst.

**22.** Computerprogrammprodukt, das ein oder mehrere computerlesbare Medien umfasst, die computerausführbare Anweisungen zum Ausführen der Schritte des Verfahrens gemäß einem der Ansprüche 12 - 21 besitzen.

**Revendications**

**1.** Système d'ajustement automatique d'au moins un élément pourvu d'au moins un actionneur et prévu à l'intérieur ou à l'extérieur d'une cabine de véhicule (1), comprenant :

au moins un groupe de microphones (4) destiné à détecter des énoncés d'au moins un locuteur et destiné à obtenir des signaux de microphones correspondant aux énoncés ;
**caractérisé en ce que** le système comprend :

un moyen de localisation (6) configuré de façon à déterminer la position de l'au moins un locuteur sur la base des signaux de microphones et sortir au moins un signal de localisation codant la position exacte de l'au moins un locuteur ; et
un moyen de commande (7) configuré de façon à recevoir l'au moins un signal de localisation et pour commander automatiquement l'au moins un actionneur de l'au moins un élément sur la base de l'au moins un signal de localisation.

**2.** Système selon la revendication 1, comprenant en outre un système de reconnaissance de la parole configuré de façon à recevoir les signaux de microphones et sortir au moins un signal d'ordre sur la base des signaux de microphones vers le moyen de commande (7), et dans lequel le moyen de commande (7) est configuré de façon à recevoir l'au moins un signal d'ordre et commander l'au moins un actionneur de l'au moins un élément sur la base de l'au moins un signal d'ordre.

**3.** Système selon la revendication 2, comprenant en outre un moyen de formation en faisceau (8) configuré de façon à :

recevoir les signaux de microphones ;
recevoir l'au moins un signal de localisation ;
former en faisceau les signaux de microphones sur la base de l'au moins un signal de localisation pour obtenir des signaux formés en faisceau ;
transmettre les signaux formés en faisceau au système de reconnaissance de la parole ; et
dans lequel le système de reconnaissance de la parole est configuré de façon à recevoir les signaux formés en faisceau et sortir l'au moins un signal d'ordre sur la base des signaux formés en faisceau vers le moyen de commande (7).

**4.** Système selon la revendication 2 ou 3, dans lequel le moyen de localisation (6) est configuré de façon à évaluer l'exactitude de la localisation de l'au moins un locuteur ;
transmettre au moins un signal de défaillance au système de reconnaissance de la parole, si l'exactitude de la localisation de l'au moins un locuteur est inférieure à un niveau prédéterminé ; et
le système de reconnaissance de la parole est configuré de façon à recevoir l'au moins un signal de défaillance et sortir une demande de répétition vers l'au moins un locuteur à réception de l'au moins un signal de défaillance.

**5.** Système selon l'une quelconque des revendications 2 à 4, dans lequel le système de reconnaissance de la parole est configuré de façon à recevoir également l'au moins un signal de localisation et sortir l'au moins un signal d'ordre sur la base de l'au moins un signal de localisation.

**6.** Système selon l'une quelconque des revendications précédentes, comprenant en outre au moins un moyen formant capteur, en particulier, un moyen formant capteur destiné à détecter la lumière du jour, configuré de façon à obtenir et transmettre au moins un signal de capteur, et dans lequel le moyen de commande (7) est configuré de façon à recevoir l'au moins un signal de capteur et commander l'au moins un actionneur de l'au moins un élément sur la base de l'au moins un signal de capteur.

**7.** System selon l'une quelconque des revendications précédentes, dans lequel le moyen de commande (7) est configuré de façon à ajuster l'au moins une cabine de véhicule (1) par mise en fonctionnement de l'au moins un actionneur, si un changement de position de l'au moins un locuteur supérieur à un niveau prédéterminé est déterminé par le moyen de localisation (6).

8. Système selon l'une quelconque des revendications précédentes, comprenant en outre un moyen de réajustement manuel destiné à réajuster l'au moins un élément par l'au moins un locuteur.

9. Système selon l'une quelconque des revendications précédentes, dans lequel l'au moins un groupe de microphones (4) comprend au moins un ensemble unidimensionnel et/ou au moins un ensemble bidimensionnel et/ou au moins un ensemble tridimensionnel de microphones.

10. Système selon la revendication 9, dans lequel l'au moins un groupe de microphones (4) comprend au moins un microphone directionnel, en particulier, plus d'un microphone directionnel pointant dans différentes directions.

11. Système selon l'une quelconque des revendications précédentes, dans lequel l'au moins un élément comprend au moins un miroir intérieur (5) et/ou au moins un miroir extérieur et/ou au moins un appui-tête et/ou au moins un accoudoir et/ou un volant de direction et/ou au moins une soufflante d'un dispositif de chauffage et/ou au moins un dispositif d'affichage, en particulier, un dispositif d'affichage d'un système de navigation embarqué, et/ou au moins un haut-parleur.

12. Procédé d'ajustement automatique d'au moins un élément pourvu d'au moins un actionneur et prévu à l'intérieur ou à l'extérieur d'une cabine de véhicule (1), comprenant des étapes consistant à :

   détecter des énoncés d'au moins un locuteur par l'intermédiaire d'au moins un groupe de microphones (4) et obtenir des signaux de microphones correspondant aux énoncés ;
   **caractérisé en ce qu'**il comprend en outre les étapes consistant à
   déterminer la position de l'au moins un locuteur sur la base des signaux de microphones ; et commander automatiquement l'au moins un actionneur de l'au moins un élément sur la base de la position déterminée de l'au moins un locuteur pour ajuster l'au moins un élément.

13. Procédé selon la revendication 12, dans lequel un système de reconnaissance de la parole est en outre prévu pour reconnaître au moins une entrée de parole de l'au moins un locuteur et obtenir un résultat de reconnaissance et dans lequel le résultat de reconnaissance détermine lesquels parmi l'au moins un élément est ajusté.

14. Procédé selon la revendication 13, dans lequel les signaux de microphones détectés par au moins un groupe de microphones (4) sont formés en faisceau et sortis vers le système de reconnaissance de la parole.

15. Procédé selon la revendication 13 ou 14, dans lequel l'exactitude de la localisation de l'au moins un locuteur est évaluée et une demande de répétition est sortie vers l'au moins un locuteur par le système de reconnaissance de la parole lorsque l'exactitude déterminée est inférieure à un niveau prédéterminé.

16. Procédé selon l'une quelconque des revendications 13 à 15, dans lequel le système de reconnaissance de la parole reçoit des informations sur la position exacte de l'au moins un locuteur et transmet ces informations à un moyen de commande (7) qui commande l'au moins un actionneur de l'au moins un élément.

17. Procédé selon l'une quelconque des revendications 12 à 16, dans lequel l'au moins un actionneur de l'au moins un élément est en outre commandé sur la base de données obtenues par au moins un moyen formant capteur, en particulier, un moyen destiné à détecter la lumière du jour.

18. Procédé selon l'une quelconque des revendications 12 à 17, dans lequel l'au moins un élément peut être manuellement réajusté par l'au moins un locuteur.

19. Procédé selon l'une quelconque des revendications 12 à 18, dans lequel la position de l'au moins un locuteur est déterminée sur la base des signaux de microphones détectés par au moins un groupe de microphones (4) comprenant au moins un ensemble unidimensionnel et/ou au moins un ensemble bidimensionnel et/ou au moins un ensemble tridimensionnel de microphones.

20. Procédé selon la revendication 19, dans lequel l'au moins un groupe de microphones (4) comprend au moins un microphone directionnel, en particulier, plus d'un microphone directionnel pointant dans différentes directions.

21. Procédé selon l'une quelconque des revendications 12 à 20, dans lequel l'au moins un élément comprend au moins un miroir intérieur (5) et/ou au moins un miroir extérieur et/ou au moins un appui-tête et/ou au moins un accoudoir et/ou un volant de direction et/ou au moins une soufflante d'un dispositif de chauffage et/ou au moins un dispositif d'affichage, en particulier, un dispositif d'affichage d'un système de navigation embarqué, et/ou au moins un haut-parleur.

**22.** Produit-programme informatique, comprenant un ou plusieurs supports lisibles par un ordinateur ayant des instructions exécutables par un ordinateur pour mettre en oeuvre les étapes du procédé selon l'une quelconque des revendications 12 à 21.

control
means

localization
means

FIG. 1

control
means

localization
means

Beamformer

speech dialog
system

FIG. 2

FIG. 3

FIG. 4

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 0472356 A1
- EP 1085781 A2
- EP 0624046 A1
- US 6731334 B1